# EUROPÄISCHE PATENTSCHRIFT

(11) **EP 4 491 417 B1**
(45) Veröffentlichungstag und Bekanntmachung des Hinweises auf die Patenterteilung: **08.04.2026**
(21) Anmeldenummer: 24182457.2
(22) Anmeldetag: 17.06.2024
(51) Int. Cl.: B60C 11/12, B60C 11/13

(54) **FAHRZEUGREIFEN**
VEHICLE TYRE
BANDAGE PNEUMATIQUE POUR VÉHICULES

(30) Priorität: 14.07.2023 DE 102023206736
(43) Veröffentlichungstag der Anmeldung: 15.01.2025
(73) Patentinhaber: Continental Reifen Deutschland GmbH, 30175 Hannover (DE)
(72) Erfinder: Kristen, Florian, 30175 Hannover (DE); Dr. Lutz, André, 30175 Hannover (DE)
(74) Vertreter: Continental Corporation

(56) Entgegenhaltungen:
- DE-A1- 102016 117 816
- DE-T5- 112016 003 414
- US-A1- 2010 200 138
- US-A1- 2022 169 081

## Beschreibung

Die Erfindung betrifft einen Fahrzeugreifen mit einem Laufstreifen mit zumindest einer beidseitig durch je eine Umfangsrille begrenzten Profilrippe, welche eine Rippenmittellinie aufweist, mit Nut-Einschnitt-Kombinationen aus jeweils einer in zumindest eine Umfangsrille einmündenden, in Draufsicht die Rippenmittellinie passierenden Quernut und genau einem in Draufsicht die Rippenmittellinie passierenden Einschnitt versehen ist, wobei die Quernut eine Breite mit einem maximalen Wert von 3,0 mm bis 6,0 mm, eine maximale Tiefe von 5% bis 30% der Profiltiefe, zwei Nutkanten, zwei Nutflanken und einen Nutgrund aufweist, wobei der Einschnitt in Draufsicht in Erstreckungsrichtung der Quernut verläuft, eine Breite von 30% bis 55% des maximalen Werts der Breite der Quernut aufweist und in eine maximale Tiefe von 65% bis 100% der Profiltiefe reicht, wobei der Einschnitt unterbrechungsfrei vom Nutgrund ausgeht und innerhalb der Profilrippe beidseitig geschlossen endet.

Ein derartiger Fahrzeugreifen, welcher insbesondere ein Nutzfahrzeugreifen ist, ist aus der US 2010/200138 A1 bekannt.

Ein weiterer Reifen ist aus der DE 10 2021 205 792 A1 bekannt. Dieser Reifen weist einen Laufstreifen mit zumindest einer mittleren Profilrippe auf, welche von zwei Umfangsrillen begrenzt ist. Die Umfangsrille weist, im Querschnitt betrachtet, jeweils einen sich V-förmig zur Laufstreifenperipherie verbreiternden, radial äußeren Abschnitt, einen in radialer Richtung verlaufenden mittleren Abschnitt und einen an diesen anschließenden radial inneren Kanalbereich auf. Die Profilrippe ist mit Nut-Einschnitt-Kombinationen aus jeweils einer in zumindest eine Umfangsrille einmündenden, in Draufsicht die Rippenmittellinie passierenden Quernut ("Einschnittverbreiterung") und genau einem in Draufsicht die Rippenmittellinie passierenden Einschnitt versehen. Der Einschnitt weist eine Breite von 0,4 mm bis 1,2 mm, insbesondere von bis zu 0,8 mm, auf und reicht in eine maximale Tiefe von 70% bis 100% der Profiltiefe. Die Quernut weist eine konstante Breite von 250% bis 370%, insbesondere von 290% bis 330%, der Breite des Einschnitts auf und beträgt daher beispielsweise zirka 4,0 mm (=3,3*1,2). Folglich beträgt die

Breite des Einschnitts beispielsweise zirka 40% (=100/250*100) oder zirka 34% (=100/290*100) der Breite der Quernut. Ferner weist die Quernut eine Tiefe von 10% bis 30%, insbesondere von 15% bis 25%, der maximalen Tiefe des Einschnitts auf, sodass bei einem Einschnitt mit einer maximalen Tiefe von 100% der Profiltiefe, die Tiefe der Quernut 10% bis 30%, insbesondere 15% bis 25%, der Profiltiefe beträgt. Der Einschnitt ist mit zumindest einem zur Laufstreifenperipherie offenen, in den radial inneren Kanalbereich der Umfangsrille einmündenden Kanal lokal verbreitert. Der Reifen soll unter Aufrechterhaltung des mit den speziellen Umfangsrillen verbundenen Rollwiderstandsvorteils ein gutes Entwässerungsverhalten aufweisen.

Ferner ist aus der DE 10 2017 222 513 A1 ein Fahrzeugluftreifen für Personenkraftwagen, Vans oder Light-Trucks bekannt, dessen Laufstreifen zumindest eine Profilrippe aufweist, welche mit in Draufsicht unter einem Winkel von bis zu 45% zur axialen Richtung verlaufenden Einschnitten und zwischen in Umfangrichtung aufeinanderfolgen Einschnitten mit Nut-Einschnitt-Kombinationen versehen ist. Jede Nut-Einschnitt-Kombination umfasst eine Quernut mit einer konstanten Breite von 2,0 mm bis 5,0 mm und einer maximalen Tiefe von zumindest 2,0 mm und höchstens 60% der Profiltiefe. Die Profiltiefe beträgt 6,5 mm bis 9,0 mm, sodass, die maximale Tiefe der Quernut zumindest 31% der Profiltiefe beträgt. Die Quernut setzt sich, in Draufsicht betrachtet, aus zueinander gewinkelt verlaufenden Nutabschnitten zusammen, wobei über die Erstreckung der Quernut an ihrem Nutgrund ein dem Verlauf der zueinander gewinkelt verlaufenden Nutabschnitte folgender Einschnitt anschließt, welcher eine Breite von 0,3 mm bis 1,2 mm aufweist und in radialer Richtung in eine maximale Tiefe reicht, die höchstens der Profiltiefe entspricht. Der Reifen soll gute Brems- und Traktionseigenschaften aufweisen.

Aktuell produzierte Reifen müssen in einigen Ländern Europas mit dem 3PMSF-Symbol (Three-Peak Mountain Snowflake, Alpine-Symbol) gekennzeichnet sein, damit sie als Winterreifen gelten. Das 3PMSF-Symbol ist ein für den Kunden leicht erkennbares Symbol einer Schneeflocke vor dem Hintergrund von drei Berggipfeln und wird erst nach einer Prüfung des Reifens vergeben, bei welcher der Reifen eine bestimmte Leistungsfähigkeit auf Schnee nachweisen muss. Das 3PMSF-Symbol gilt aktuell als einziges Symbol, das hervorragende Wintereigenschaften des Reifens tatsächlich bestätigt.

Vor dem obigen Hintergrund ist es daher auch bei Fahrzeugreifen der eingangs genannten Art, welche insbesondere für den Ganzjahreseinsatz vorgesehen sind, von großem Interesse, die Schneeperformance weiter zu verbessern, sodass diese mit dem 3PMSF-Symbol gekennzeichnet werden dürfen. Gute Fahreigenschaften auf trockener Fahrbahn (Trockenperformance), für welche vor allem eine möglichst hohe Profilsteifigkeit von Bedeutung ist, sowie auf nasser Fahrbahn (Nässeperformance) sollen dabei auf möglichst hohem Niveau aufrechterhalten werden. In dieser Hinsicht besteht bei Reifen der eingangs genannten Art weiterhin Optimierungsbedarf.

Der Erfindung liegt daher die Aufgabe zugrunde, bei einem Fahrzeugreifen der eingangs genannten Art die Schneeperformance, die Trockenperformance und die Nässeperformance auf günstiger ausbalancierte Weise als bisher zu verbessern.

Gelöst wird die gestellte Aufgabe erfindungsgemäß dadurch, dass im Erstreckungsbereich des Einschnitts an eine Nutflanke angrenzend zumindest eine zur Laufstreifenperipherie offene, lokale Vertiefung ausgebildet ist.

Durch den beidseitig geschlossen endenden Einschnitt bleibt eine für die Trockenperformance hohe Steifigkeit der mittleren Profilrippe erhalten. In den Vertiefungen wird beim Fahren auf einer Schneefahrbahn wirkungsvoll Schnee angesammelt und verdichtet, sodass über den Effekt der Schnee-Schnee-Reibung die Schneeperformance verbessert ist. Beim Fahren auf nasser Fahrbahn sorgen der Einschnitt und die lokalen Vertiefungen für eine wirkungsvolle Entwässerung der Profilrippe, sodass eine hervorragende Balance zwischen der Schneeperformance, der Trockenperformance und der Nässeperformance erzielt ist.

Gemäß einer bevorzugten Ausführung verläuft die Quernut, in Draufsicht betrachtet, gerade, durchgehend gebogen oder in Form einer in axialer Richtung langgezogenen S-Kurve. Dies ist für das Wasserdrainageverhalten der Querrille und somit für die Nässeperformance von Vorteil. Besonders vorteilhaft ist eine Quernut in Form der langgezogenen S-Kurve, da sich in einer solchen - unter Aufrechterhaltung einer guten Nässeperformance - beim Abrollen auf Schnee dieser in der Quernut besonders gut verdichtet.

Gemäß einer alternativen bevorzugten Ausführung verläuft die Quernut, in Draufsicht betrachtet, in Form einer in axialer Richtung langgezogenen S-Kurve und ist aus zwei in Umfangsrichtung zueinander versetzt ausgebildeten, gerade, insbesondere in axialer Richtung, verlaufenden, randseitigen Nutabschnitten und einem die Rippenmittellinie passierenden, durchgehend S-förmig geschwungen verlaufenden, zentralen Nutabschnitt zusammengesetzt, wobei der Einschnitt ausschließlich im Bereich des zentralen Nutabschnitts vom Nutgrund ausgeht, wobei der zentrale Nutabschnitt, in Draufsicht betrachtet, den Einschnitt vorzugsweise beidseitig überragt und/oder vorzugsweise eine auf die Nutmittellinie bezogene, in die axiale Richtung projizierte Länge von 65% bis 90%, insbesondere von 70% bis 85%, der in die axiale Richtung projizierten Länge der Quernut aufweist. Eine solche S-Form ist aufgrund ihres in axialer Richtung ausgerichteten "Queranteils" bei den üblicherweise vorwiegend in Umfangsrichtung auftretenden Traktions- und Bremskräften vor allem für die Nässeperformance günstig.

Eine weitere bevorzugte Ausführung ist dadurch gekennzeichnet, dass angrenzend an jeder Nutflanke der Quernut jeweils zumindest eine, insbesondere mehrere, vorzugsweise drei bis fünf, zur Laufstreifenperipherie offene, lokale Vertiefung(en) ausgebildet ist bzw. sind. Dies trägt zu einer weiteren Verbesserung der Schneeperformance bei.

Bei der letztgenannten Ausführung ist es vorteilhaft, wenn Vertiefungen, welche an derselben Seite der Quernut angrenzend sowie unmittelbar benachbart zueinander ausgebildet sind, voneinander einen an der Rippenaußenfläche der Profilrippe als kleinstmöglichen Abstand ermittelten gegenseitigen Abstand von 1,0 mm bis 3,0 mm aufweisen. Derart zueinander benachbarte Vertiefungen wirken im Hinblick auf die Schneeperformance auf vorteilhafte Weise zusammen.

Eine weitere bevorzugte Ausführung sieht vor, dass die Vertiefung(en) an der Quernut am Niveau der Rippenaußenfläche der Profilrippe eine entlang einer geraden Hilfslinie gemessene, maximale Länge, eine auf die Hilfslinie bezogene, in Draufsicht senkrecht zu dieser ermittelte, maximale Breite und eine auf die Hilfslinie bezogene in radialer Richtung ermittelte, maximale Tiefe aufweist bzw. aufweisen, wobei die maximale Breite und die maximale Tiefe jeweils 40% bis 100%, insbesondere 45% bis 80%, bevorzugt 50% bis 60%, besonders bevorzugt bis zu 55%, der maximalen Tiefe der Quernut und die maximale Länge 80% bis 200%, insbesondere 100% bis 160%, bevorzugt 120% bis 140%, der maximalen Tiefe der Quernut beträgt. Derart dimensionierte Vertiefungen tragen unter Bedachtnahme der Trockenperformance zu einer weiteren Verbesserung der Nässeperformance bei.

Ferner ist es bevorzugt, wenn die Vertiefung(en) durch einen durchgehend nach innen gewölbten Boden begrenzt ist bzw. sind, wobei die Vertiefung(en) vorzugsweise die Form eines Viertels einer Kugel aufweist bzw. aufweisen. Dies sorgt für eine gute Rissbeständigkeit des an die Vertiefung angrenzenden Gummimateriales, was für die Trockenperformance vorteilhaft ist.

Eine weitere bevorzugte Ausführung sieht vor, dass der Einschnitt, in Draufsicht betrachtet, eine auf die Einschnittmittellinie bezogene, in die axiale Richtung projizierte Länge von 35% bis 75%, insbesondere von 40% bis 60%, bevorzugt von bis zu 55%, besonders bevorzugt von bis zu 50%, der in die axiale Richtung projizierten Länge der Quernut aufweist. Dies sorgt für die Aufrechterhaltung einer hohen Steifigkeit der Profilrippe und ist somit für die Trockenperformance günstig. Die angegebenen Untergrenzen sind vor allem für die Entwässerung günstig.

Gemäß einer weiteren bevorzugten Ausführung mündet der Einschnitt im Inneren der Profilrippe in zwei von den Umfangsrillen beabstandete, entlang der Einschnittränder ausgebildete, in radialer Richtung verlaufende und in radialer Richtung langgestreckte Hohlräume ein. Die Hohlräume stellen zusätzliche Wasserreservoire dar und verbessern somit die Nässeperformance weiter.

Bei der letztgenannten Ausführung ist es für die Nässeperformance von weiterem Vorteil, wenn die Hohlräume rohrförmig und, im parallel zur Rippenaußenfläche der Profilrippe verlaufenden Querschnitt betrachtet, kreisförmig mit einem Durchmesser von 125% bis 200%, insbesondere von 135% bis 180%, bevorzugt von 140% bis 160%, der Breite des Einschnitts ausgeführt sind.

Ferner ist es bei der letztgenannten Ausführung für die Nässeperformance von weiterem Vorteil, wenn die Hohlräume in radialer Richtung eine Länge von 65% bis 100%, insbesondere von 75% bis 85%, der in radialer Richtung ermittelten maximalen Erstreckungshöhe des Einschnitts aufweisen, wobei die Hohlräume vorzugsweise am Niveau der maximalen Tiefe des Einschnitts enden.

Eine weitere bevorzugte Ausführung sieht vor, dass die Quernuten, in Draufsicht betrachtet, zur axialen Richtung unter einem Winkel von 5° bis 35°, insbesondere von 10° bis 30°, vorzugsweise von höchstens 10°, verlaufen, wobei sich der Winkel bei nicht gerade verlaufenden Quernuten auf eine die Enden der Nutmittellinie verbindend gerade Hilfslinie bezieht.

Eine weitere bevorzugte Ausführung ist dadurch gekennzeichnet, dass die Breite der Quernut zu ihren Enden abnimmt und einen minimalen Wert von 30% bis 60%, insbesondere von 35% bis 55%, bevorzugt von 40%% bis 50%, ihres maximalen Werts aufweist, wobei - falls die randseitige Nutabschnitte vorhanden sind - die Breite den minimalen Wert in den randseitigen Nutabschnitten aufweist. Dies trägt zu einer Vergleichmäßigung der Steifigkeit der Profilrippe im Bereich der Querrille bei und ist somit für die Trockenperformance günstig.

Vorteilhaft ist ferner, wenn die in die axiale Richtung projizierte Länge der Quernut zumindest 75% der in die axiale Richtung projizierten maximalen Breite der Profilrippe beträgt bzw. wenn die Quernut eine in die axiale Richtung projizierte Länge von zumindest 75% der in die axiale Richtung projizierten maximalen Breite der Profilrippe aufweist. Dies ist für die Nässeperformance von Vorteil.

Eine weitere bevorzugte Ausführung ist dadurch gekennzeichnet, dass an die Vertiefung(en) eine bzw. jeweils eine in Draufsicht in Umfangsrichtung langgestreckt, insbesondere rechteckförmige, weitere Vertiefung anschließt, welche eine ausgehend von der Vertiefung kontinuierlich abnehmende, in radialer Richtung ermittelte Tiefe aufweist. Die Vertiefungen erzeugen zusätzliche Griffkanten sowie zusätzliches oberflächliches Leervolumen und tragen somit zu einer weiteren Verbesserung der Nässeperformance bei.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine vereinfachte Draufsicht auf einen in die Ebene abgewickelten Umfangsabschnitt eines Laufstreifens eines Nutzfahrzeugreifens mit einer ersten Ausführungsvariante der Erfindung,
Fig. 2 eine vergrößerte Draufsicht auf das Detail Z₂ der Fig. 1,
Fig. 3 eine Schrägansicht des Details der Fig. 2,
Fig. 4 einen Schnitt entlang der Linie IV-IV der Fig. 2,
Fig. 5 einen Schnitt entlang der Linie V-V der Fig. 2,
Fig. 6 einen perspektivischen Schnitt analog zu Fig. 5,
Fig. 7 eine Schnitt entlang der Linie VII-VII der Fig. 2,
Fig. 8 eine vereinfachte Draufsicht auf einen in die Ebene abgewickelten Umfangsabschnitt einer Profilrippe eines Laufstreifens mit einer zweiten Ausführungsvariante der Erfindung und
Fig. 9 eine vereinfachte Draufsicht auf einen in die Ebene abgewickelten Umfangsabschnitt einer Profilrippe eines Laufstreifens mit einer dritten Ausführungsvariante der Erfindung.

Gemäß der Erfindung ausgeführte Fahrzeugreifen sind Reifen für Kraftfahrzeuge, insbesondere für mehrspurige Kraftfahrzeuge, sowie bevorzugt Nutzfahrzeugreifen in Radialbauart für Felgen mit einem Felgendurchmesser von 17,5, 19,5 oder 22,5 Zoll, wobei die Reifen für den Ganzjahreseinsatz vorgesehen sind.

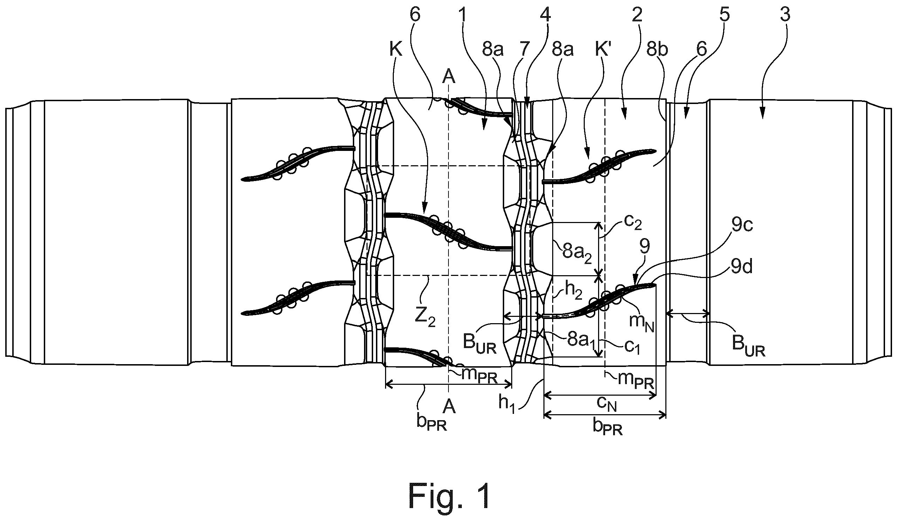

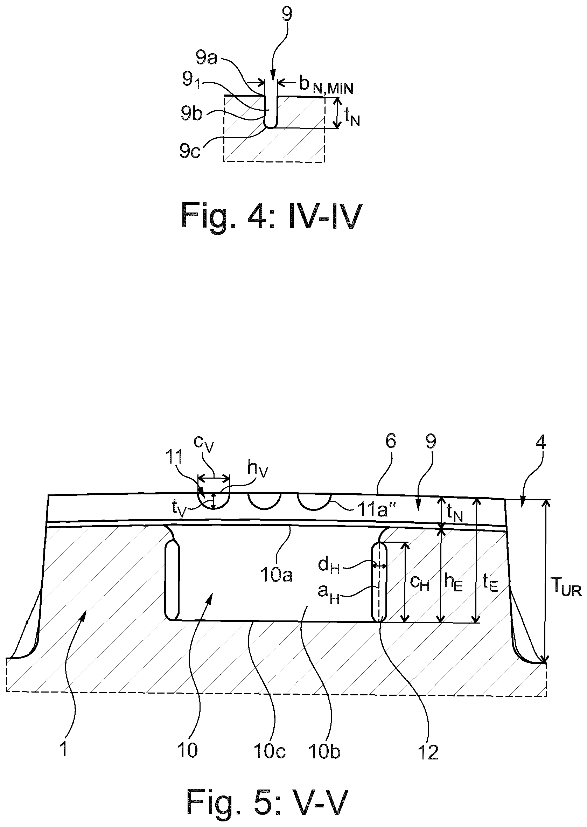

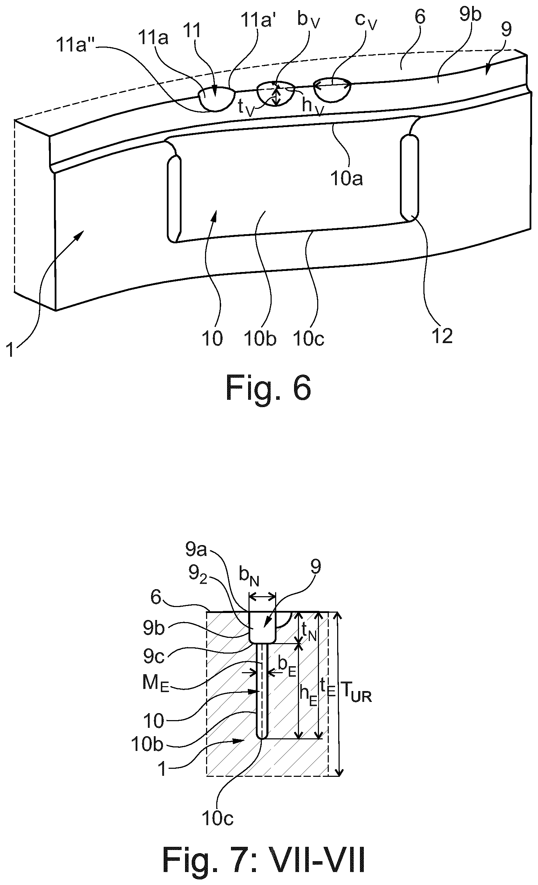

Fig. 1 zeigt einen Umfangsabschnitt eines Laufstreifens eines Nutzfahrzeugreifens. Die Reifenäquatorialebene ist durch eine Linie A-A angedeutet. Der Laufstreifen weist eine im Bereich der Reifenäquatorialebene in Umfangsrichtung umlaufende zentrale Profilrippe 1, zwei halbmittige Profilrippen 2 und zwei lediglich vereinfacht dargestellte, insbesondere in bekannte Weise strukturierte, schulterseitige Profilrippen 3 auf. Die zentrale Profilrippe 1 ist von den halbmittigen Profilrippen 2 jeweils durch eine in Draufsicht wellenartig verlaufende, mittlere Umfangsrille 4 getrennt und jede halbmittige Profilrippe 2 ist zur jeweils benachbarten, schulterseitigen Profilrippe 3 durch eine in Draufsicht gerade verlaufende, schulterseitige Umfangsrille 5 getrennt. Die Umfangsrillen 4, 5 sind in radialer Richtung in der jeweils vorgesehenen Profiltiefe T_{UR} (eingezeichnet in Fig. 5, Fig. 7) ausgeführt, welche für Nutzfahrzeugreifen üblicherweise 10,0 mm bis 26,0 mm und für PKW-, Van- und Light-Truck-Reifen üblicherweise 6,5 mm bis 13,0 mm beträgt, und weisen an der Laufstreifenperipherie in axialer Richtung jeweils eine maximale Breite B_{UR} (Breite an der breitesten Stelle) auf, die für Nutzfahrzeugreifen vorzugsweise 10,0 mm bis 25,0 mm beträgt. Sind die Umfangsrillen 3, 4 verschieden tief ausgeführt, wird unter der Profiltiefe T_{UR} die Tiefe der tiefsten Umfangsrille(n) 3,4 verstanden.

Die Ausgestaltung der Profilrippen 1, 2, auf welche nachfolgend genauer eingegangen wird, ist derart, dass der Laufstreifen bezüglich der Reifenäquatorialebene (Linie A-A) eine asymmetrische Gestalt aufweist und der Fahrzeugreifen keine bevorzugte Orientierung auf der Achse eines Fahrzeuges besitzt.

Jede Profilrippe 1, 2 ist durch eine in der Laufstreifenperipherie liegende Rippenaußenfläche 6 und zur jeweils angrenzenden Umfangsrille 4, 5 durch eine Rippenflanke 7 begrenzt. Die zentrale Profilrippe 1 weist ferner an jeder mittleren Umfangsrille 4 eine in Draufsicht wellenartig geschwungen verlaufende Rippenkante 8a, die halbmittigen Profilrippen 2 weisen an der jeweils angrenzenden, mittleren Umfangsrille 4 eine in Draufsicht geschwungen wellenartig verlaufende Rippenkante 8a und an der jeweils angrenzenden schulterseitigen Umfangsrille 5 eine in Draufsicht gerade verlaufende Rippenkante 8b auf. Drüber hinaus weisen die Profilrippen 1, 2 jeweils eine an der Rippenaußenfläche 6 in axialer Richtung ermittelte maximale Breite b_{PR} sowie eine die maximale Breite b_{PR} halbierende, in Umfangsrichtung verlaufende Rippenmittellinie m_{PR} auf. Die maximale Breite b_{PR} bezieht sich bei den wellenartig geschwungen verlaufenden Rippenkanten 8a auf eine in Umfangsrichtung verlaufende Hilfslinie h₁, welche durch die in axialer Richtung am weitesten in die mittlere Umfangsrille 4 hineinragenden Stellen der Rippenkante 8a verläuft.

Die nachfolgenden Erläuterungen zu den Rippenkanten 8a beziehen sich auf die Draufsicht.

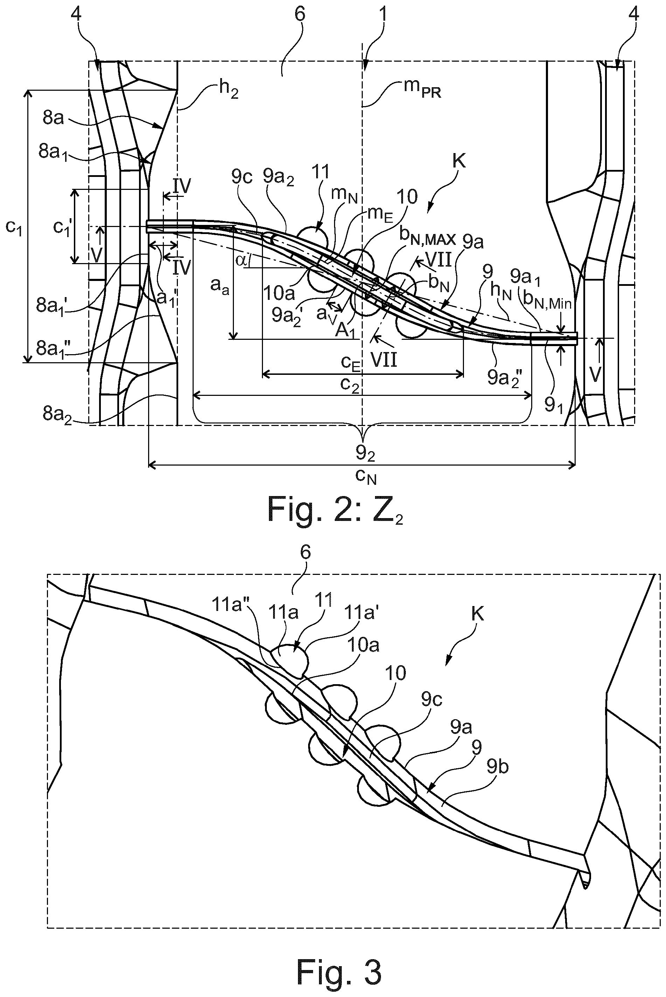

Jede wellenartig geschwungen verlaufende Rippenkante 8a setzt sich aus insgesamt bogenartig verlaufenden Kantenabschnitten 8a₁, welche zu ihrer Kantenmitte hin in die angrenzende mittlere Umfangsrille 4 zunehmend vorspringen, und gerade in Umfangsrichtung verlaufenden Kantenabschnitten 8a₂ zusammen (vergl. Fig. 2), wobei in Umfangsrichtung abwechselnd ein Kantenabschnitt 8a₁ auf einen Kantenabschnitt 8a₂ folgt.

Die Kantenabschnitte 8a₁ ragen gegenüber einer durch die gegenseitigen Anschlussstellen der Kantenabschnitte 8a₁, 8a₂ in Umfangsrichtung verlaufende Hilfslinie h₂ in die jeweilige mittlere Umfangsrille 4 hinein, weisen eine in die Umfangsrichtung projizierte Länge c₁ (vergl. Fig. 2) von 25,0 mm bis 50,0 mm auf und setzen sich gemäß Fig. 2 jeweils aus einem gerade in Umfangsrichtung verlaufenden, mittigen Kantenabschnittteil 8a₁' und zwei zur Umfangsrichtung geneigt verlaufenden Kantenabschnittteilen 8a₁" zusammen, wobei der eine Kantenabschnittteil 8a₁" zum anderen Kantenabschnittteil 8a₁" bezüglich der Umfangsrichtung gegensinnig geneigt verläuft. Der mittige Kantenabschnittteil 8a₁' weist eine in Umfangsrichtung ermittelte Länge c₁' von 25% bis 50%, insbesondere zumindest 40%, der zugehörigen Länge c₁ und eine gegenüber der und senkrecht zur Hilfslinie h₂ ermittelte, maximale Auslenkung a₁' von 1,0 mm bis 7,0 mm auf.

Wie Fig. 1 zeigt, sind die Rippenkanten 8a der zentralen Profilrippe 1 in Umfangsrichtung zueinander versetzt ausgebildet, wobei gemäß Fig. 2 die eine Rippenkante 8a zur anderen Rippenkante 8a einen in Umfangsrichtung ermittelten, auf die Mittelpunkte der mittigen Kantenabschnittteile 8a₁' bezogenen Versatz aₐ von 35% bis 50% der aus den Längen c₁ sämtlicher Kantenabschnitte 8a₁ beider Rippenkanten 8a als arithmetischer Mittelwert errechneten mittleren Länge aufweist. Gemäß Fig. 1 sind die jeweils an derselben mittleren Umfangsrille 4 befindlichen Rippenkanten 8a in Umfangsrichtung derart zueinander versetzt, dass die Kantenabschnitte 8a₁ der einen Rippenkante 8a den Kantenabschnitten 8a₂ der anderen Rippenkanten 8a gegenüberliegen.

Wie Fig. 1 ferner zeigt, sind die Profilrippen 1, 2 jeweils mit einer Anzahl von über ihre Umfangserstreckung verteilt ausgebildeten Nut-Einschnitt-Kombinationen K (zentrale Profilrippe 1), K' (halbmittige Profilrippen 2) versehen, wobei die Anzahl der Nut-Einschnitt-Kombinationen K, K' mit der Anzahl der Kantenabschnitte 8a₁ einer der Rippenkanten 8a (zentrale Profilrippe 1) bzw. mit der Anzahl der vorspringenden Kantenabschnitte 8a₁ der Rippenkante 8a (halbmittige Profilrippe 2) übereinstimmt. Nachfolgend wird die Ausgestaltung der Nut-Einschnitt-Kombinationen K insbesondere anhand einer einzelnen Nut-Einschnitt-Kombination K erläutert. Anschließend wird auf die Ausgestaltung der Nut-Einschnitt-Kombination K' eingegangen.

Gemäß Fig. 1 sind die Nut-Einschnitt-Kombinationen K in der zentralen Profilrippe 1 jeweils zwischen zwei den Versatz aₐ (Fig. 2) zueinander aufweisenden, mittigen Kantenabschnittteilen 8a₁' ausgebildet und verlaufen, in Draufsicht und bei vertikal ausgerichtet Reifenäquatorialebene betrachtet, parallel zueinander sowie linkssteigend, also von rechts unten nach links oben.

Wie Fig. 2 und Fig. 3 miteinander zeigen, ist jede Nut-Einschnitt-Kombination K aus einer von der Rippenaußenfläche 6 ausgehenden Quernut 9 und einem in radialer Richtung an die Quernut 9 anschließenden Einschnitt 10 gebildet. Die Nut-Einschnitt-Kombination K ist, in Draufsicht betrachtet, drehsymmetrisch bezüglich einer in radialer Richtung verlaufenden, auf der Rippenmittellinie m_{PR} liegenden Achse A₁ (Fig. 2, erscheint als Punkt) ausgeführt, wobei die Nut-Einschnitt-Kombination K durch eine Drehung um 180° auf sich selbst abgebildet wird. Ferner grenzen an die Quernut 9 zur Rippenaußenfläche 6 offene, lokale Vertiefungen 11 an, auf deren Ausgestaltung noch genauer eingegangen wird.

Gemäß Fig. 2 verläuft die Quernut 9, in Draufsicht mit in vertikaler Richtung verlaufender Rippenmittellinie m_{PR} betrachtet, in Form einer liegenden in axialer Richtung langgezogenen S-Kurve, wobei die Quernut 9 über die den Versatz aₐ zueinander aufweisenden, mittigen Kantenabschnittteilen 8a₁' - bezogen auf die Länge c₁' dieser Kantenabschnittteile 8a₁' - mittig in die mittleren Umfangsrillen 4 einmündet. Die Quernut 9 setzt sich, in Draufsicht betrachtet, aus zwei in Umfangsrichtung zueinander versetzten, gerade verlaufenden, randseitigen Nutabschnitten 9₁ und einem die Rippenmittellinie m_{PR} passierenden, durchgehend S-förmig geschwungen verlaufenden, zentralen Nutabschnitt 9₂ zusammen, ist an der Rippenaußenfläche 6 durch zwei knickfreie, von den Vertiefungen 11 partiell unterbrochene Nutkanten 9a begrenzt, weist, ebenfalls in Draufsicht betrachtet, eine ihrem Verlauf mittig folgende, zu den Nutkanten 9a übereinstimmend beabstandete Nutmittellinie m_{N} auf, verläuft - bezogen auf eine die Nutmittellinie m_{N} verbindende gerade Hilfslinie h_{N} - zur axialen Richtung unter einem Winkel α von 5° bis 35°, insbesondere von 10° bis 30°, vorzugsweise von höchstens 10°, wobei sich der Winkel α beim Ausführungsbeispiel aus dem jeweiligen Versatz aₐ und der Breite b_{PR} (Fig. 1) der zentralen Profilrippe 1 ergibt.

Gemäß Fig. 3, Fig. 4 und Fig. 7 ist die Quernut 9 von zwei von je einer der Nutkanten 9a ausgehenden, über die kompletten Nutkanten 9a verlaufenden Nutflanken 9b (in Fig. 3 ist eine der Nutflanken 9b zu sehen) und in radialer Richtung durch einen zwischen den Nutflanken 9b verlaufenden Nutgrund 9c begrenzt. Wie Fig. 4 und Fig. 7 zeigt, verläuft der Nutgrund 9c, im in Draufsicht senkrecht zur Nutmittellinie m_{N} ausgerichteten Querschnitt betrachtet, U-förmig gerundet. Die Nutflanken 9b verlaufen, im erwähnten Querschnitt betrachtet, gerade sowie zur radialen Richtung unter einem Winkel von 0° bis 3°, bevorzugt von 0°.

Wie Fig. 2 ferner zeigt, weist die Quernut 9 eine auf die Nutmittellinie m_{N} bezogene, am Niveau der Rippenaußenfläche 6 ermittelte, in die axiale Richtung projizierte Länge c_{N}, welche mit der Breite b_{PR} (Fig. 1) der zentralen Profilrippe 1 übereinstimmt, eine in radialer Richtung ermittelte beim Ausführungsbeispiel konstante, maximale Tiefe t_{N} (Fig. 4, Fig. 5, Fig. 7, Tiefe an der tiefsten Stelle) von 5% bis 30%, insbesondere von 10% bis 25%, bevorzugt von 15% bis 20%, der Profiltiefe T_{UR} (Fig. 5, Fig. 7) sowie ferner eine zwischen den Nutkanten 9a senkrecht zur Nutmittellinie m_{N} ermittelte Breite b_{N} auf, auf deren Größe noch eingegangen wird. Die Breite b_{N} ist senkrecht zu einer an die jeweilige Stelle der Nutmittellinie m_{N} angelengten Tangente sowie in jenen Bereichen, in welchen die Nutkanten 9a von den Vertiefungen 11 unterbrochen sind, derart ermittelt, als wären die Vertiefungen 11 nicht vorhanden und die Nutflanken 9b bis zur Rippenaußenfläche 6 und die Nutkanten 9a an der Rippenaußenfläche 6 fortgeführt.

Die anschließenden Ausführungen zu den Nutkanten 9a beziehen sich auf die Draufsicht.

Gemäß Fig. 2 setzen sich die Nutkanten 9a jeweils aus zwei jeweils gerade, parallel zueinander sowie in axialer Richtung verlaufenden, randseitigen Kantenabschnitten 9a₁, welche jeweils über einen der randseitigen Nutabschnitte 9₁ reichen, und einem über den zentralen Nutabschnitt 9₂ reichenden, tangential an die Kantenabschnitte 9a₁ anschließenden, zentralen Kantenabschnitt 9a₂ zusammen. Der zentrale Kantenabschnitt 9a₂ ist aus einem die Rippenmittellinie m_{PR} passierenden, gerade verlaufenden, mittigen Kantenunterabschnitt 9a₂' und zwei an je einem der randseitigen Kantenabschnitte 9a₁ anschließenden, bogenförmig verlaufenden, seitlichen Kantenunterabschnitten 9a₂" gebildet. Die Kanten(unter)abschnitte 9a₁, 9a₂, 9a₂', 9a₂" schließen - entsprechend der erwähnten knickfreien Ausführung der Nutkanten 9a - tangential aneinander an. Die mittigen Kantenunterabschnitte 9a₂' der beiden Nutkanten 9a verlaufen parallel zueinander.

Der zentrale Nutabschnitt 9₂ weist, in Draufsicht betrachtet, eine auf die Nutmittellinie m_{N} bzw. auf die Enden der zentralen Kantenabschnitte 9a₂ bezogene, in die axiale Richtung projizierte Länge c₂ von 65% bis 90%, insbesondere von 70% bis 85%, der Länge c_{N} der Quernut 9 auf. Die bereits erwähnte Breite b_{N} der Quernut 9 weist im mittigen Bereich des zentralen Nutabschnitts 9₂, in welchem Teile der mittigen Kantenunterabschnitte 9a₂' parallel zur Nutmittellinie m_{N} verlaufen, einen maximalen Wert b_{N,MAX} (vergl. Fig. 7) von 3,0 mm bis 6,0 mm auf, nimmt ausgehend vom Bereich des maximalen Werts b_{N,MAX} über die kompletten, seitlichen Kantenunterabschnitte 9a₂", und daher bis zu den Kantenabschnitten 9a₁, kontinuierlich (also nicht sprunghaft) ab und weist in den randseitigen Nutabschnitten 9₁ einen konstanten, minimalen Wert b_{N,MIN} (vergl. Fig. 4) von 30% bis 60%, insbesondere von 35% bis 55%, bevorzugt von 40%% bis 50%, des maximalen Werts b_{N,MAX} auf.

Wie Fig. 2 und Fig. 3 in Kombination zeigen, geht der bereits erwähnte Einschnitt 10 ausschließlich im Bereich des zentralen Nutabschnitts 9₂ (Fig. 2) vom Nutgrund 9c aus, wobei der Einschnitt 10, in Draufsicht betrachtet, vom zentralen Nutabschnitt 9₂ beidseitig überragt ist, ausgehend vom Nutgrund 9c in radialer Richtung (Fig. 5 bis Fig. 7) in die zentrale Profilrippe 1 hineinverläuft, beidseitig geschlossen innerhalb der Profilrippe 1 endet (vergl. Fig. 5, Fig. 6), am Nutgrund 9c liegende Einschnittkanten 10a (Fig. 3, Fig. 6) aufweist und von zwei an den Einschnittkanten 10a anschließenden, einander gegenüberliegenden, in radialer Richtung verlaufenden Einschnittwänden 10b (Fig. 5 bis Fig. 7) und einen zwischen den radial inneren Enden der Einschnittwände 10b verlaufenden Einschnittgrund 10c (Fig. 5 bis Fig. 7) begrenzt ist. "Geschlossen enden" bedeutet, dass der Einschnitt 10 in keine an die Profilrippe 1 angrenzende Umfangsrille 4 einmündet. Der Einschnitt 10 ist dabei, in Draufsicht betrachtet, vom Nutgrund 9c umlaufen (Fig. 2). Gemäß Fig. 2 weist der Einschnitt 10 ferner eine in Draufsicht mittig zwischen den Einschnittkanten 10a liegende, dem Einschnittverlauf folgende, mit der Nutmittellinie m_{N} zusammenfallende Einschnittmittellinie m_{E}, eine von der Einschnittmittellinie m_{E} ausgehende in radialer Richtung verlaufende Einschnittmittelfläche M_{E} (Fig. 7), eine zwischen den Einschnittwänden 10b sowie senkrecht zur Einschnittmittelfläche M_{E} ermittelte, konstante Breite b_{E} (Fig. 7) von 20% bis 60%, insbesondere von 30% bis 55%, bevorzugt von zumindest 35%, besonders bevorzugt zumindest 40%, des maximalen Werts b_{N,MAX} (Fig. 2, Fig. 7) und eine in Draufsicht auf die Einschnittmittellinie m_{E} bezogene, in die axiale Richtung projizierte Länge c_{E} von 35% bis 75%, insbesondere 40% bis 60%, bevorzugt bis zu 55%, besonders bevorzugt bis zu 50%, der Länge c_{N} der Quernut 9 auf, reicht gegenüber dem Niveau der Rippenaußenfläche 6 in radialer Richtung bis eine maximale Tiefe t_{E} (Fig. 5, Fig. 7, Tiefe an der tiefsten Stelle) von 50% bis 100%, insbesondere von 65% bis 95%, der Profiltiefe T_{UR} (Fig. 5, Fig. 7) und weist außerdem eine zwischen dem Niveau der Tiefe t_{N} der Quernut 9 und dem Niveau maximalen Tiefe t_{E} in radialer Richtung ermittelte, maximale Erstreckungshöhe h_{E} (Fig. 5, Fig. 7, Höhe an der höchsten Stelle) auf. Die maximale Tiefe t_{E} und die maximale Erstreckungshöhe h_{E} sind beim Ausführungsbeispiel jeweils konstant (Fig. 5).

Gemäß Fig. 5 mündet der Einschnitt 10 beim gezeigten Ausführungsbeispiel im Inneren der zentrale Profilrippe 1 in in radialer Richtung langgestreckte, an den Einschnitträndern ausgebildete, rohrförmige, im Wesentlichen kreiszylindrische Hohlräume 12 ein (vergl. Fig. 6). Jeder Hohlraum 12 weist eine in radialer Richtung durch seine Mitte verlaufende Hauptachse a_{H} auf, reicht bis in die maximale Tiefe t_{E}, also bis auf das Niveau des Einschnittgrunds 10c, ist, im parallel zur Rippenaußenfläche 6 verlaufenden Querschnitt betrachtet, kreisförmig ausgeführt und weist, im erwähnten Querschnitt betrachtet, einen Durchmesser d_{H} von 125% bis 200%, insbesondere von 135% bis 180%, bevorzugt von 140% bis 160%, der Breite b_{E} (Fig. 7) des Einschnitts 10 sowie ferner eine entlang der Hauptachse a_{H} gemessene Länge c_{H} von 65% bis 100%, insbesondere von 75% bis 85%, der Erstreckungshöhe h_{E} des Einschnitts 10 auf.

Gemäß Fig. 2 sind an jeder Seite des zentralen Nutabschnitts 9₂ jeweils drei der bereits erwähnten Vertiefungen 11 angrenzend an die entsprechende Nutflanke 9b (Fig. 6) sowie im Erstreckungsbereich des Einschnitts 10, also im Bereich der Länge c_{E}, ausgebildet, wobei je eine der drei Vertiefungen 11, in Draufsicht betrachtet, von der Rippenmittellinie m_{PR} geschnitten ist und sich die beiden anderen der drei Vertiefungen 11 an den verschiedenen Seiten der Rippenmittellinie m_{PR} befinden und wobei die an die eine Nutflanke 9b angrenzenden Vertiefungen 11 zu den an die andere Nutflanke 9b angrenzenden Vertiefungen 11 entlang der Erstreckung der Nutmittellinie m_{N} bzw. der Einschnittmittellinie m_{E} zueinander versetzt sind. Wie Fig. 3 und Fig. 6 zeigen, weisen die Vertiefungen 11 - unter Vernachlässigung des gekrümmten Verlaufs der Quernut 9 - jeweils die Form eines Viertels einer Kugel auf, wobei jede Vertiefung 11 gemäß Fig. 6 durch einen durchgehend nach innen gewölbten, dem Teilstück einer Kugeloberfläche entsprechenden Boden 11a mit einer an der Rippenaußenfläche 6 verlaufenden, halbkreisförmigen Begrenzungskante 11a' und einer an der Nutflanke 9b verlaufenden, halbkreisförmige Begrenzungskante 11a" begrenzt ist. In Fig. 5 und Fig. 6 ist jeweils zwischen den gegenseitigen Anschlussstellen der Begrenzungskanten 11a' (Fig. 6), 11a" gerade verlaufende Hilfslinie h_{V} eingezeichnet. Jede Vertiefung 11 weist eine am Niveau der Rippenaußenfläche 6 ermittelte, auf die Hilfslinie h_{V} bezogene und in Draufsicht senkrecht zu dieser ermittelte, maximale Breite b_{V} (Fig. 6, Breite an der breitesten Stelle), eine auf die Hilfslinie h_{V} bezogene in radialer Richtung ermittelte maximale Tiefe t_{V} (Tiefe an der tiefsten Stelle) und eine entlang der Hilfslinie h_{V} ermittelte maximale Länge c_{V} (Länge an der längsten Stelle) auf, wobei die maximale Breite b_{V} und die maximale Tiefe t_{V} jeweils 40% bis 100%, insbesondere 45% bis 80%, bevorzugt 50% bis 60%, besonders bevorzugt bis zu 55%, der maximalen Tiefe t_{N} (Fig. 5) der Quernut 9 und die maximale Länge c_{V} 80% bis 200%, insbesondere von 100% bis 160%, bevorzugt von 120% bis 140%, der maximalen Tiefe t_{N} (Fig. 5) der Quernut 9 betragen bzw. beträgt. Die Länge c_{V} beträgt beim Ausführungsbeispiel - entsprechend der Form der Vertiefung 11 - das Zweifache der maximalen Breite b_{V} bzw. das Zweifache der maximalen Tiefe t_{V}. An derselben Seite des zentralen Nutabschnitts 9₂ befindliche Vertiefungen 11 weisen voneinander als kleinstmögliche Abstände ermittelte Abstände a_{V} (Fig. 2) von 1,0 mm bis 3,0 mm auf.

Wie Fig. 1 zeigt, unterscheiden sich die bereits erwähnten, in den halbmittigen Profilrippen 2 ausgebildeten Nut-Einschnitt-Kombinationen K' von den in der zentralen Profilrippe 1 befindlichen Nut-Einschnitt-Kombination K dadurch, dass deren Quernut 9 ausschließlich in die entsprechende mittlere Umfangsrille 4 einmündet und vor der schulterseitigen Umfangsrille 5 endet, wobei die Quernut 9 eine auf die Nutmittellinie m_{N} bezogene, am Niveau der Rippenaußenfläche 6 ermittelte, in die axiale Richtung projizierte Länge c_{N} von 75% bis 95% der maximalen Breite b_{PR} der halbmittigen Profilrippe 2 aufweist und eine an ihrem geschlossenen Ende in Verlängerung des Nutgrundes 9c sowie zur Rippenaußenfläche 6 verlaufende Nutendflanke 9d aufweist. Ferner sind die Nut-Einschnitt-Kombinationen K', in Draufsicht betrachtet, um 180° gedreht zu den Nut-Einschnitt-Kombinationen K orientiert sowie zu diesen in Umfangsrichtung versetzt ausgebildet.

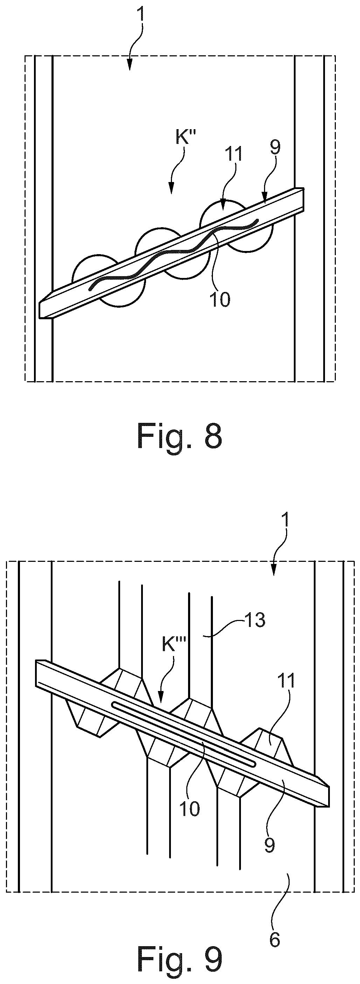

Fig. 8 und Fig. 9 zeigen je eine schematische Draufsicht auf einen Umfangsabschnitt einer zentralen Profilrippe 1, wobei im gezeigten Umfangsabschnitt eine Nut-Einschnitt-Kombination K" (Fig. 8), K‴ (Fig. 9) ausgebildet ist. Die Nut-Einschnitt-Kombination K", K‴ stellt je eine Alternative zur Nut-Einschnitt-Kombination K bzw. K' dar.

Wie Fig. 8 zeigt, unterscheidet sich die Nut-Einschnitt-Kombination K" von der Nut-Einschnitt-Kombination K dadurch, dass die Quernut 9, in Draufsicht betrachtet, gerade verläuft, und der Einschnitt 10, in Draufsicht betrachtet, wellenförmig verläuft.

Gemäß Fig. 9 unterscheidet sich die Nut-Einschnitt-Kombination K‴ von der Nut-Einschnitt-Kombination K dadurch, dass die Quernut 9 und der Einschnitt 10, in Draufsicht betrachtet, jeweils gerade verlaufen, die Vertiefungen 11, in Draufsicht betrachtet, trapezförmig ausgeführt sind, wobei die Trapezbasis an der Quernut 9 liegt und wobei an die kurze Grundseite des Trapezes eine zur Rippenaußenfläche 6 auslaufende, im in Umfangsrichtung langgestreckt rechteckförmige Vertiefung 13 anschließt. Die Vertiefung 13 weist daher eine ausgehend von der Vertiefung 11 kontinuierlich abnehmende Tiefe auf.

Die Erfindung ist auf die beschriebenen Ausführungsbeispiele nicht beschränkt.

Die Vertiefungen können eine von der beschriebenen Gestalt abweichende Gestalt aufweisen. Es ist zumindest eine Vertiefung an zumindest einer Seite bei jeder Quernut vorgesehen. Die Quernut kann, in Draufsicht betrachtet, insbesondere auch durchgehend gebogen (bogenförmig) verlaufen. Der Laufstreifen weist zumindest eine beliebig positionierte mittlere Profilrippe mit entsprechenden Nut-Einschnitt-Kombinationen auf, wobei die Nuten der Nut-Einschnitt-Kombinationen in zumindest eine an die mittlere Profilrippe angrenzende Umfangsrille einmünden.

Die mittlere Profilrippe kann daher eine im Bereich der Reifenäquatorialebene verlaufende zentrale Profilrippe oder eine seitlich der Reifenäquatorialebene verlaufende mittige bzw. halbmittige Profilrippe sein. Die die Profilrippe(n) begrenzenden Umfangsrillen sowie die Rippenkanten können, in Draufsicht betrachtet, jeweils gerade oder wellenförmig verlaufen. Die Einschnitte können, in Draufsicht betrachtet, gerade, zumindest abschnittsweise wellenförmig, beispielsweise in Form von Zickzackwellen oder Trapezwellen, verlaufen. Ferner verlaufen die Einschnitte, in Draufsicht betrachtet, in Erstreckungsrichtung der Quernut. Die Einschnitte, d.h. die Einschnittmittellinien bzw. bei wellenförmig verlaufenden Einschnitten eine in Ausbreitungsrichtung der Welle definierende Wellenmittellinie, folgen der Nutmittellinie bzw. einer parallel zur Nutmittellinie verlaufenden Linie, wobei sie mit dieser nicht deckungsgleich verlaufen müssen.

### Bezugszeichenliste

- 1: zentrale Profilrippe
- 2: halbmittige Profilrippe
- 3: schulterseitige Profilrippe
- 4: mittlere Umfangsrille
- 5: schulterseitige Umfangsrille
- 6: Rippenaußenfläche
- 7: Rippenflanke
- 8a: Rippenkante
- 8a₁': Kantenabschnitt
- 8a₁": mittiger Kantenabschnittteil
- 8a₁: Kantenabschnittteil
- 8a₂: Kantenabschnitt
- 8b: Rippenkante
- 9: Quernut
- 9₁: randseitiger Nutabschnitt
- 9₂: zentraler Nutabschnitt
- 9a: Nutkante
- 9a₁: randseitiger Kantenabschnitt
- 9a₂: zentraler Kantenabschnitt
- 9a₂': mittiger Kantenunterabschnitt
- 9a₂": seitlicher Kantenunterabschnitt
- 9b: Nutflanke
- 9c: Nutgrund
- 9d: Nutendflanke
- 10: Einschnitt
- 10a: Einschnittkante
- 10b: Einschnittwand
- 10c: Einschnittgrund
- 11: Vertiefung
- 11a: Boden
- 11a', 11a": Begrenzungskante
- 12: Hohlraum
- 13: Vertiefung
- A-A: Linie (Reifenäquatorialebene)
- A₁: Achse
- a₁': maximale Auslenkung
- aₐ: Versatz
- a_{H}: Hauptachse
- a_{V}: Abstand
- b_{E}, b_{N}: Breite
- b_{N,MAx}: maximaler Wert
- b_{N,MIN}: minimaler Wert
- b_{PR}, B_{UR}, b_{V}: maximale Breite
- c₁, c₁', c₂, c_{E}, c_{H}, c_{N}: Länge
- c_{V}: maximale Länge
- d_{H}: Durchmesser
- h₁, h₂, h_{N}, h_{V}: Hilfslinie
- h_{E}: maximale Erstreckungshöhe
- K, K`, K", K‴: Nut-Einschnitt-Kombination
- m_{E}: Einschnittmittellinie
- M_{E}: Einschnittmittelfläche
- m_{N}: Nutmittelline
- m_{PR}: Rippenmittellinie
- t_{E}: maximale Tiefe
- t_{N}: Tiefe
- t_{V}: maximale Tiefe
- T_{UR}: Profiltiefe
- Z₂: Detail
- α: Winkel

## Patentansprüche

1. Fahrzeugreifen mit einem Laufstreifen mit zumindest einer beidseitig durch je eine Umfangsrille (4, 5) begrenzten Profilrippe (1, 2), welche eine Rippenmittellinie (m_{PR}) aufweist, mit Nut-Einschnitt-Kombinationen (K, K', K", K‴) aus jeweils einer in zumindest eine Umfangsrille (4, 5) einmündenden, in Draufsicht die Rippenmittellinie (m_{PR}) passierenden Quernut (9) und genau einem in Draufsicht die Rippenmittellinie (m_{PR}) passierenden Einschnitt (10) versehen ist, wobei die Quernut (9) eine Breite (b_{N}) mit einem maximalen Wert (b_{N,MAX}) von 3,0 mm bis 6,0 mm, eine maximale Tiefe (t_{N}) von 5% bis 30% der Profiltiefe (T_{UR}), zwei Nutkanten (9a), zwei Nutflanken (9b) und einen Nutgrund (9c) aufweist, wobei der Einschnitt (10) vom Nutgrund (9c) ausgeht, in Draufsicht in Erstreckungsrichtung der Quernut (9) verläuft, eine Breite (b_{E}) von 20% bis 60% des maximalen Werts (b_{N,MAX}) der Breite (b_{N}) der Quernut (9) aufweist und in eine maximale Tiefe (t_{E}) von 50% bis 100% der Profiltiefe (T_{UR}) reicht, wobei der Einschnitt (10) unterbrechungsfrei vom Nutgrund (9c) ausgeht und innerhalb der Profilrippe (1, 2) beidseitig geschlossen endet, **dadurch gekennzeichnet, dass** im Erstreckungsbereich des Einschnitts (10) angrenzend an eine Nutflanke (9b) zumindest eine zur Laufstreifenperipherie offene, lokale Vertiefung (11) ausgebildet ist.

2. Fahrzeugreifen nach Anspruch 1, **dadurch gekennzeichnet, dass** die Quernut (9), in Draufsicht betrachtet, gerade, durchgehend gebogen oder in Form einer in axialer Richtung langgezogenen S-Kurve verläuft.

3. Fahrzeugreifen nach Anspruch 1, **dadurch gekennzeichnet, dass** die Quernut (9), in Draufsicht betrachtet, in Form einer in axialer Richtung langgezogenen S-Kurve verläuft und aus zwei in Umfangsrichtung zueinander versetzt ausgebildeten, gerade, insbesondere in axialer Richtung, verlaufenden, randseitigen Nutabschnitten (9₁) und einem die Rippenmittellinie (m_{PR}) passierenden, durchgehend S-förmig geschwungen verlaufenden, zentralen Nutabschnitt (9₂) zusammengesetzt ist, wobei der Einschnitt (10) ausschließlich im Bereich des zentralen Nutabschnitts (9₂) vom Nutgrund (9c) ausgeht, wobei der zentrale Nutabschnitt (9₂), in Draufsicht betrachtet, den Einschnitt (10) vorzugsweise beidseitig überragt und/oder vorzugsweise eine auf die Nutmittellinie (m_{N}) bezogene, in die axiale Richtung projizierte Länge (c₂) von 65% bis 90%, insbesondere von 70% bis 85%, der in die axiale Richtung projizierten Länge (c_{N}) der Quernut (9) aufweist.

4. Fahrzeugreifen nach einem der Ansprüche 1 bis 3, **dadurch gekennzeichnet, dass** angrenzend an jeder Nutflanke (9b) der Quernut (9) jeweils zumindest eine, insbesondere mehrere, vorzugsweise drei bis fünf, zur Laufstreifenperipherie offene, lokale Vertiefung(en) (11) ausgebildet ist bzw. sind.

5. Fahrzeugreifen nach Anspruch 4, **dadurch gekennzeichnet, dass** Vertiefungen (11), welche an derselben Seite der Quernut (9) angrenzend sowie unmittelbar benachbart zueinander ausgebildet sind, voneinander einen an der Rippenaußenfläche (6) der Profilrippe (1, 2) als kleinstmöglichen Abstand ermittelten gegenseitigen Abstand (a_{V}) von 1,0 mm bis 3,0 mm aufweisen.

6. Fahrzeugreifen nach einem der Ansprüche 1 bis 5, **dadurch gekennzeichnet, dass** die Vertiefung(en) (11) an der Quernut (9) am Niveau der Rippenaußenfläche (6) der Profilrippe (1, 2) eine entlang einer geraden Hilfslinie (h_{V}) gemessene, maximale Länge (c_{V}), eine auf die Hilfslinie (h_{V}) bezogene, in Draufsicht senkrecht zu dieser ermittelte, maximale Breite (b_{V}) und eine auf die Hilfslinie (h_{V}) bezogene in radialer Richtung ermittelte, maximale Tiefe (t_{V}) aufweist bzw. aufweisen, wobei die maximale Breite (b_{V}) und die maximale Tiefe (t_{V}) jeweils 40% bis 100%, insbesondere 45% bis 80%, bevorzugt 50% bis 60%, besonders bevorzugt bis 55%, der maximalen Tiefe (t_{N}) der Quernut (9) und die maximale Länge (c_{V}) 80% bis 200%, insbesondere 100% bis 160%, bevorzugt 120% bis 140%, der maximalen Tiefe (t_{N}) der Quernut (9) beträgt.

7. Fahrzeugreifen nach einem der Ansprüche 1 bis 6, **dadurch gekennzeichnet, dass** die Vertiefung(en) (11) durch einen durchgehend nach innen gewölbten Boden (11a) begrenzt ist bzw. sind, wobei die Vertiefung(en) (11) vorzugsweise die Form eines Viertels einer Kugel aufweist bzw. aufweisen.

8. Fahrzeugreifen nach einem der Ansprüche 1 bis 7, **dadurch gekennzeichnet, dass** der Einschnitt (10), in Draufsicht betrachtet, eine auf die Einschnittmittellinie (m_{E}) bezogene, in die axiale Richtung projizierte Länge (c_{E}) von 35% bis 75%, insbesondere von 40% bis 60%, bevorzugt von bis zu 55%, besonders bevorzugt von bis zu 50%, der in die axiale Richtung projizierten Länge (c_{N}) der Quernut (9) aufweist.

9. Fahrzeugreifen nach einem der Ansprüche 1 bis 8, **dadurch gekennzeichnet, dass** der Einschnitt (10) im Inneren der Profilrippe (1) in zwei von den Umfangsrillen (4, 5) beabstandete, entlang der Einschnittränder ausgebildete, in radialer Richtung verlaufende und in radialer Richtung langgestreckte Hohlräume (12) einmündet.

10. Fahrzeugreifen nach Anspruch 9, **dadurch gekennzeichnet, dass** die Hohlräume (12) rohrförmig und, im parallel zur Rippenaußenfläche (6) der Profilrippe (1, 2) verlaufenden Querschnitt betrachtet, kreisförmig mit einem Durchmesser (d_{H}) von 125% bis 200%, insbesondere von 135% bis 180%, bevorzugt von 140% bis 160%, der Breite (b_{E}) des Einschnitts (10) ausgeführt sind.

11. Fahrzeugreifen nach Anspruch 9 oder 10, **dadurch gekennzeichnet, dass** die Hohlräume (12) in radialer Richtung eine Länge (c_{H}) von 65% bis 100%, insbesondere von 75% bis 85%, der in radialer Richtung ermittelten maximalen Erstreckungshöhe (h_{E}) des Einschnitts (10) aufweisen, wobei die Hohlräume (12) vorzugsweise am Niveau der maximalen Tiefe (t_{E}) des Einschnitts (10) enden.

12. Fahrzeugreifen nach einem der Ansprüche 1 bis 11, **dadurch gekennzeichnet, dass** die Quernuten (9), in Draufsicht betrachtet, zur axialen Richtung unter einem Winkel (α) von 5° bis 35°, insbesondere von 10° bis 30°, vorzugsweise von höchstens 10°, verlaufen, wobei sich der Winkel (α) bei nicht gerade verlaufenden Quernuten (9) auf eine die Enden der Nutmittellinie (m_{N}) verbindend gerade Hilfslinie (h_{N}) bezieht.

13. Fahrzeugreifen nach einem der Ansprüche 1 bis 12, **dadurch gekennzeichnet, dass** die Breite (b_{N}) der Quernut (9) zu ihren Enden abnimmt und einen minimalen Wert (b_{N,MIN}) von 30% bis 60%, insbesondere von 35% bis 55%, bevorzugt von 40% % bis 50%, ihres maximalen Werts (b_{N,MAX}) aufweist, wobei - falls die randseitige Nutabschnitte (9₁) vorhanden sind - die Breite (b_{N}) den minimalen Wert (b_{N,MIN}) in den randseitigen Nutabschnitten (9₁) aufweist.

14. Fahrzeugreifen nach einem der Ansprüche 1 bis 13, **dadurch gekennzeichnet, dass** die in die axiale Richtung projizierte Länge (c_{N}) der Quernut (9) zumindest 75% der in die axiale Richtung projizierten maximalen Breite (b_{PR}) der Profilrippe (1, 2) beträgt bzw.
dass die Quernut (9) eine in die axiale Richtung projizierte Länge (c_{N}) von zumindest 75% der in die axiale Richtung projizierten maximalen Breite (b_{PR}) der Profilrippe (1, 2) aufweist.

15. Fahrzeugreifen nach einem der Ansprüche 1 bis 14, **dadurch gekennzeichnet, dass** an die Vertiefung(en) (11) eine bzw. jeweils eine in Draufsicht in Umfangsrichtung langgestreckt, insbesondere rechteckförmige, weitere Vertiefung (13) anschließt, welche eine ausgehend von der Vertiefung (11) kontinuierlich abnehmende, in radialer Richtung ermittelte Tiefe aufweist.

## Claims

1. Vehicle tyre comprising a tread with at least one profile rib (1, 2) which is delimited on both sides by in each case one circumferential groove (4, 5), has a rib centre line (m_{PR}) and is provided with groove/sipe combinations (K, K', K", K‴) consisting of in each case one transverse groove (9), which merges into at least one circumferential groove (4, 5) and in plan view passes the rib centre line (m_{PR}), and precisely one sipe (10), which in plan view passes the rib centre line (m_{PR}), wherein the transverse groove (9) has a width (b_{N}) with a maximum value (b_{N,MAX}) of 3.0 mm to 6.0 mm, a maximum depth (t_{N}) of 5% to 30% of the profile depth (T_{UR}), two groove edges (9a), two groove flanks (9b) and a groove base (9c), wherein the sipe (10) extends from the groove base (9c) and in plan view runs in the direction of extent of the transverse groove (9), has a width (b_{E}) of 20% to 60% of the maximum value (b_{N,MAX}) of the width (b_{N}) of the transverse groove (9) and reaches to a maximum depth (t_{E}) of 50% to 100% of the profile depth (T_{UR}), wherein the sipe (10) extends uninterruptedly from the groove base (9c) and ends closed on both sides within the profile rib (1, 2), **characterized in that**, in the region of extent of the sipe (10), at least one local depression (11) which is open towards the periphery of the tread is formed adjacent to a groove flank (9b).

2. Vehicle tyre according to Claim 1, **characterized in that** the transverse groove (9), when seen in plan view, runs straight, continuously curved or in the form of an S curve elongated in the axial direction.

3. Vehicle tyre according to Claim 1, **characterized in that** the transverse groove (9), when seen in plan view, runs in the form of an S curve elongated in the axial direction and is made up of two bordering groove portions (9₁), formed offset in relation to one another in the circumferential direction and running straight, in particular in the axial direction, and a central groove portion (9₂), passing the rib centre line (m_{PR}) and running in a continuously S-shaped curved manner, wherein, only in the region of the central groove portion (9₂), the sipe (10) extends from the sipe base (9c), wherein the central groove portion (9₂), when seen in plan view, protrudes beyond the sipe (10), preferably on both sides, and/or preferably has a length (c₂), projected in the axial direction, with respect to the groove centre line (m_{N}), of 65% to 90%, in particular of 70% to 85%, of the length (c_{N}), projected in the axial direction, of the transverse groove (9).

4. Vehicle tyre according to one of Claims 1 to 3, **characterized in that**, adjacent to each groove flank (9b) of the transverse groove (9), in each case at least one, in particular more than one, preferably three to five, local depression(s) (11) open to the periphery of the tread is or are formed.

5. Vehicle tyre according to Claim 4, **characterized in that** depressions (11) which are formed adjacent to the same side of the transverse groove (9) and directly neighbouring one another are at a mutual distance (av) from one another, determined at the rib outer surface (6) of the profile rib (1, 2) as the smallest possible distance, of 1.0 mm to 3.0 mm.

6. Vehicle tyre according to one of Claims 1 to 5, **characterized in that** the depression(s) (11) at the transverse groove (9) has or have at the level of the rib outer surface (6) of the profile rib (1, 2) a maximum length (cv), measured along a straight projection line (hv), a maximum width (bv), with respect to the projection line (hv), determined in plan view perpendicularly thereto, and a maximum depth (tv), determined in the radial direction with respect to the projection line (hv), wherein the maximum width (bv) and the maximum depth (tv) is in each case 40% to 100%, in particular 45% to 80%, preferably 50% to 60%, particularly preferably up to 55%, of the maximum depth (t_{N}) of the transverse groove (9) and the maximum length (c_{V}) is 80% to 200%, in particular 100% to 160%, preferably 120% to 140%, of the maximum depth (t_{N}) of the transverse groove (9).

7. Vehicle tyre according to one of Claims 1 to 6, **characterized in that** the depression(s) (11) is or are delimited by a continuously inwardly curved bottom (11a), wherein the depression(s) (11) preferably has or have the form of a quarter of a sphere.

8. Vehicle tyre according to one of Claims 1 to 7, **characterized in that** the sipe (10) has, when seen in plan view, a length (c_{E}), projected in the axial direction, with respect to the sipe centre line (m_{E}), of 35% to 75%, in particular of 40% to 60%, preferably of up to 55%, particularly preferably of up to 50%, of the length (c_{N}), projected in the axial direction, of the transverse groove (9).

9. Vehicle tyre according to one of Claims 1 to 8, **characterized in that**, inside the profile rib (1), the sipe (10) merges into two cavities (12), which are at a distance from the circumferential grooves (4, 5), are formed along the sipe borders, run in the radial direction and are elongated in the radial direction.

10. Vehicle tyre according to Claim 9, **characterized in that** the cavities (12) are designed as tubular and, when seen in the cross section running parallel to the rib outer surface (6) of the profile rib (1, 2), circular with a diameter (d_{H}) of 125% to 200%, in particular of 135% to 180%, preferably of 140% to 160%, of the width (b_{E}) of the sipe (10).

11. Vehicle tyre according to Claim 9 or 10, **characterized in that** the cavities (12) have in the radial direction a length (c_{H}) of 65% to 100%, in particular of 75% to 85%, of the maximum height of extent (h_{E}), determined in the radial direction, of the sipe (10), wherein the cavities (12) preferably end at the level of the maximum depth (t_{E}) of the sipe (10).

12. Vehicle tyre according to one of Claims 1 to 11, **characterized in that** the transverse grooves (9), when seen in plan view, run at an angle (α) to the axial direction of 5° to 35°, in particular of 10° to 30°, preferably of at most 10°, wherein, in the case of transverse grooves (9) that are not running straight, the angle (α) relates to a straight projection line (h_{N}), joining the ends of the groove centre line (m_{N}).

13. Vehicle tyre according to one of Claims 1 to 12, **characterized in that** the width (b_{N}) of the transverse groove (9) decreases towards its ends and has a minimum value (b_{N,MIN}) of 30% to 60%, in particular of 35% to 55%, preferably of 40% to 50%, of its maximum value (b_{N,MAX}), wherein - if the bordering groove portions (9₁) are present - the width (b_{N}) has the minimum value (b_{N,MIN}) in the bordering groove portions (9₁).

14. Vehicle tyre according to one of Claims 1 to 13, **characterized in that** the length (c_{N}), projected in the axial direction, of the transverse groove (9) is at least 75% of the maximum width (b_{PR}), projected in the axial direction, of the profile rib (1, 2) or
**in that** the transverse groove (9) has a length (c_{N}) of at least 75% of the maximum width (b_{PR}), projected in the axial direction, of the profile rib (1, 2).

15. Vehicle tyre according to one of Claims 1 to 14, **characterized in that** the depression(s) (11) is or are adjoined by a further depression or in each case a further depression (13), which in plan view is elongated in the circumferential direction, is in particular rectangular and has a depth, determined in the radial direction, that decreases continuously from the depression (11).

## Revendications

1. Pneu de véhicule avec une bande de roulement avec au moins une nervure profilée (1, 2) délimitée des deux côtés par une rainure périphérique (4, 5), laquelle comporte une ligne médiane de nervure (m_{PR}), avec des combinaisons rainure-entaille (K, K'**,** K", K"') composées d'une rainure transversale (9) débouchant dans au moins une rainure périphérique (4, 5), traversant la ligne médiane de nervure (m_{PR}) dans une vue de dessus et précisément d'une entaille (10) traversant la ligne médiane de nervure (m_{PR}) dans une vue de dessus, la rainure transversale (9) présentant une largeur (b_{N}) avec une valeur maximale (b_{N,MAX}) de 3,0 mm à 6,0 mm, une profondeur maximale (t_{N}) de 5 % à 30 % de la profondeur de profil (T_{UR}), deux bords (9a) de rainure, deux flancs (9b) de rainure et un fond (9c) de rainure, l'entaille (10) partant du fond (9c) de rainure, s'étendant dans une vue de dessus dans le sens de l'extension de la rainure transversale (9), présentant une largeur (b_{E}) de 20 % à 60 % de la valeur maximale (b_{N,MAX}) de la largeur (b_{N}) de la rainure transversale (9), et atteignant une profondeur maximale (t_{E}) de 50 % à 100 % de la profondeur de profil (T_{UR}),
l'entaille (10) partant sans interruption du fond (9c) de rainure et se terminant de manière fermée de part et d'autre à l'intérieur de la nervure profilée (1, 2), **caractérisé en ce qu'**au moins un creux local (11) ouvert vers la périphérie de bande de roulement est formé dans la zone d'extension de l'entaille (10) de manière adjacente à un flanc (9b) de rainure.

2. Pneu de véhicule selon la revendication 1, **caractérisé en ce que** la rainure transversale (9), vue de dessus, s'étend de manière rectiligne, de manière courbée en continu ou sous la forme d'une courbe en S allongée dans la direction axiale.

3. Pneu de véhicule selon la revendication 1, **caractérisé en ce que** la rainure transversale (9), vue de dessus, s'étend sous la forme de courbe en S allongée dans la direction axiale et se compose de deux sections de rainure côté bord (9₁) décalées l'une par rapport à l'autre dans la direction périphérique, s'étendant de manière rectiligne, en particulier dans la direction axiale, et d'une section de rainure centrale (9₂) traversant la ligne médiane de nervure (m_{PR}), s'étendant de manière galbée avec une forme de S en continu, l'entaille (10) partant du fond (9c) de rainure exclusivement dans la zone de la section de rainure centrale (9₂), la section de rainure centrale (9₂), vue de dessus, dépassant de préférence des deux côtés de l'entaille (10) et/ou présentant de préférence une longueur (c₂), par rapport à la ligne médiane de rainure (m_{N}) et projetée dans la direction axiale, de 65 % à 90 %, en particulier de 70 % à 85 %, de la longueur (c_{N}) de la rainure transversale (9) projetée dans la direction axiale.

4. Pneu de véhicule selon l'une des revendications 1 à 3, **caractérisé en ce qu'**est formé/sont formés, de manière adjacente à chaque flanc (9b) de rainure de la rainure transversale (9), respectivement au moins un creux local, en particulier plusieurs, de préférence trois à cinq, creux locaux (11) ouverts vers la périphérie de bande de roulement.

5. Pneu de véhicule selon la revendication 4, **caractérisé en ce que** des creux (11), qui sont formés de manière adjacente au même côté de la rainure transversale (9) et à proximité immédiate les uns par rapport aux autres, présentent les uns des autres un espacement mutuel (av) de 1,0 mm à 3,0 mm déterminé comme étant le plus petit possible sur la surface extérieure (6) de nervure de la nervure profilée (1, 2).

6. Pneu de véhicule selon l'une des revendications 1 à 5, **caractérisé en ce que** le ou les creux (11) sur la rainure transversale (9) présentent au niveau de la surface extérieure (6) de nervure de la nervure profilée (1, 2) une longueur maximale (cv) mesurée le long d'une ligne droite auxiliaire (hv), une largeur maximale (b_{V}) par rapport à la ligne auxiliaire (h_{V}) déterminée perpendiculairement à celle-ci dans une vue de dessus, et une profondeur maximale (tv) par rapport à la ligne auxiliaire (hv) déterminée dans la direction radiale, la largeur maximale (b_{V}) et la profondeur maximale (t_{V}) allant chacune de 40 % à 100 %, en particulier de 45 % à 80 %, de manière préférée de 50 % à 60 %, de manière particulièrement préférée jusqu'à 55 %, de la profondeur maximale (t_{N}) de la rainure transversale (9) et la longueur maximale (cv) allant de 80 % à 200 %, en particulier de 100 % à 160 %, de manière préférée de 120 % à 140 %, de la profondeur maximale (t_{N}) de la rainure transversale (9).

7. Pneu de véhicule selon l'une des revendications 1 à 6, **caractérisé en ce que** le ou les creux (11) est ou sont délimités par une base (11a) incurvée en continu vers l'intérieur, le ou les creux (11) présentant de préférence la forme d'un quart d'une sphère.

8. Pneu de véhicule selon l'une des revendications 1 à 7, **caractérisé en ce que** l'entaille (10) présente, dans une vue de dessus, une longueur (c_{E}), par rapport à la ligne médiane d'entaille (m_{E}) projetée dans la direction axiale, de 35 % à 75 %, en particulier de 40 % à 60 %, de manière préférée jusqu'à 55 %, de manière particulièrement préférée jusqu'à 50 %, de la longueur (c_{N}) de la rainure transversale (9) projetée dans la direction axiale.

9. Pneu de véhicule selon l'une des revendications 1 à 8, **caractérisé en ce que** l'entaille (10) débouche à l'intérieur de la nervure profilée (1) dans deux cavités (12) espacées des rainures périphériques (4, 5), formées le long des bords d'entaille, s'étendant dans la direction radiale et allongées dans la direction radiale.

10. Pneu de véhicule selon la revendication 9, **caractérisé en ce que** les cavités (12) sont tubulaires et sont, vues dans la section transversale s'étendant parallèlement à la surface extérieure (6) de nervure de la nervure profilée (1, 2), circulaires avec un diamètre (d_{H}) de 125 % à 200 %, en particulier de 135 % à 180 %, de manière préférée de 140 % à 160 %, de la largeur (b_{E}) de l'entaille (10).

11. Pneu de véhicule selon la revendication 9 ou 10, **caractérisé en ce que** les cavités (12) présentent, dans la direction radiale, une longueur (c_{H}) de 65 % à 100 %, en particulier de 75 % à 85 %, de la hauteur d'extension maximale (h_{E}) de l'entaille (10) déterminée dans la direction radiale, les cavités (12) se terminant de préférence au niveau de la profondeur maximale (t_{E}) de l'entaille (10).

12. Pneu de véhicule selon l'une des revendications 1 à 11, **caractérisé en ce que** les rainures transversales (9) s'étendent, vues du dessus, par rapport à la direction axiale selon un angle (α) de 5° à 35°, en particulier de 10° à 30°, de préférence de 10° au maximum, l'angle (α) se rapportant à une ligne droite auxiliaire (h_{N}) reliant les extrémités de la ligne médiane de rainure (m_{N}) dans le cas de rainures transversales (9) ne s'étendant pas de manière rectiligne.

13. Pneu de véhicule selon l'une des revendications 1 à 12, **caractérisé en ce que** la largeur (b_{N}) de la rainure transversale (9) diminue vers ses extrémités et présente une valeur minimale (b_{N,MIN}) de 30 % à 60 %, en particulier de 35 % à 55 %, de manière préférée de 40 % à 50 %, de sa valeur maximale (b_{N,MAX}), la largeur (b_{N}) présentant la valeur minimale (b_{N,MIN}) dans les sections de rainure côté bord (9₁) - si les sections de rainure côté bord (9₁) sont présentes -.

14. Pneu de véhicule selon l'une des revendications 1 à 13, **caractérisé en ce que** la longueur (c_{N}) de la rainure transversale (9) projetée dans la direction axiale est d'au moins 75 % de la largeur maximale (b_{PR}) de la nervure profilée (1, 2) projetée dans la direction axiale et/ou
**que** la rainure transversale (9) présente une longueur (c_{N}), projetée dans la direction axiale, d'au moins 75 % de la largeur maximale (b_{PR}), projetée dans la direction axiale, de la nervure profilée (1, 2).

15. Pneu de véhicule selon l'une des revendications 1 à 14, **caractérisé en ce que** se raccorde au(x) creux (11) un autre creux (13) allongé dans la direction périphérie dans une vue de dessus, en particulier rectangulaire, qui présente une profondeur diminuant en continu en partant de creux (11), déterminée dans la direction radiale.
